# FASCICULE DE BREVET EUROPEEN

(11) **EP 2 113 977 B1**
(45) Date de publication et mention de la délivrance du brevet: **27.06.2012**
(21) Numéro de dépôt: 09290211.3
(22) Date de dépôt: 20.03.2009
(51) Int. Cl.: H02G 3/12

(54) **Accessoire de montage d'un bloc électrique dans un conduit de cheminement de câbles et ensemble électrique comprenant un bloc électrique ainsi qu'un tel accessoire**
Montagezubehör für ein Elektrogerät in einem Kabelkanal und elektrische Baugruppe bestehend aus einem Elektrogerät und solch einem Montagezubehör
Mounting accessory for an electric device in a cable channel and assembly comprising an electric device and such an accessory

(30) Priorité: 29.04.2008 FR 0802403
(43) Date de publication de la demande: 04.11.2009
(73) Titulaire: Legrand France, 87000 Limoges (FR)
(72) Inventeur: Jarry, Patrice, 72140 Mont Saint Jean (FR)
(74) Mandataire: Orsini, Fabienne

(56) Documents cités:
- EP-A- 0 933 853
- EP-A- 1 189 323
- EP-A- 1 780 852
- FR-A- 2 734 422

## Description

### DOMAINE TECHNIQUE AUQUEL SE RAPPORTE L'INVENTION

La présente invention concerne un accessoire de montage d'un bloc électrique dans un conduit de cheminement de câbles ou de conducteurs électriques.

Elle concerne également un ensemble électrique comprenant un bloc électrique comportant au moins une embase pour reposer sur un support quelconque, pourvue d'au moins un orifice et un tel accessoire de montage.

L'invention trouve une application particulièrement avantageuse pour le montage dans une colonne technique d'un bloc électrique appelé communément "nourrice".

### ARRIERE-PLAN TECHNOLOGIQUE

On connaît déjà notamment du document EP 1 780 852 un accessoire d'immobilisation d'un appareillage électrique sur un socle d'une goulotte. Cet accessoire permet d'améliorer la tenue d'un appareillage dit "à clipsage direct" sur un tel socle.

Un appareillage électrique est dit « à clipsage direct » sur le socle d'une goulotte, dans la mesure où il vient se monter, sans mise en oeuvre d'un moyen de fixation particulier, dans l'ouverture longitudinale du socle à l'emplacement choisi par l'installateur, l'enjoliveur de cet appareillage venant alors fermer localement ladite ouverture longitudinale du socle en s'étendant en largeur d'un bord longitudinal à l'autre de celle-ci, sensiblement dans le même plan que les tronçons de couvercle. Le socle d'un appareillage électrique "à clipsage direct" comporte généralement des pattes flexibles munies de dents qui viennent s'accrocher à des bandes de clipsage définies le long des bords longitudinaux de l'ouverture du socle de la goulotte.

La flexibilité naturelle du socle de la goulotte peut conduire, en cas de contrainte, à un écartement local des deux parois latérales du socle, c'est-à-dire à un élargissement local de l'ouverture longitudinale, préjudiciable à la bonne tenue de l'appareillage électrique sur le socle. C'est pour cela que l'on prévoit un accessoire d'immobilisation, mis en place dans l'ouverture longitudinale du socle de la goulotte, au travers de celle-ci, à proximité de l'appareillage électrique, pour empêcher, au moins localement, l'écartement de ladite ouverture longitudinale.

Selon le document EP 1 780 852, l'accessoire d'immobilisation se présente sous la forme d'une traverse qui comporte deux parties, à savoir un support et un cache rapporté sur ledit support. Ici, le support comporte un pont rigide qui s'étend, à hauteur de l'enjoliveur de l'appareillage électrique, transversalement dans l'ouverture longitudinale du socle d'un bord à l'autre de celle-ci, et des pattes flexibles conformées le long de deux côtés transversaux parallèles du pont et agencées pour coopérer avec les bandes de clipsage parallèles du socle de la goulotte. Les pattes flexibles sont reliées entre elles par un élément élastique s'étendant sensiblement parallèlement au pont et pouvant être rapproché du pont pour diminuer ladite force d'accrochage, autorisant ainsi le mouvement de l'accessoire d'immobilisation dans la direction longitudinale du socle de la goulotte.

Cependant, l'accessoire d'immobilisation ne constitue pas, à proprement dit, un moyen de montage de l'appareillage électrique sur le socle de la goulotte car, pour remplir sa fonction de renfort et/ou d'immobilisation, il n'a pas besoin d'être apparié à l'appareillage.

Par ailleurs, on connaît des blocs électriques appelés "nourrices" qui comportent une embase destinée à être fixée sur un support quelconque comme le plan de travail ou le pied d'un bureau, un panneau ou encore un mur ou le sol. Cette embase est pourvue d'orifices au travers desquels sont engagées les vis de fixation de l'embase sur le support.

Pour leur montage dans un socle d'une goulotte, les nourrices connues comportent à l'arrière des moyens de montage destinés à coopérer avec des aménagements prévus dans le fond du socle de la goulotte.

De tels moyens de montage sont décrits notamment dans le document DE 10 2005 022441.

Toutefois, ce type de bloc électrique est complexe à réaliser du fait des moyens spécifiques prévus sur son boîtier pour permettre son montage dans un socle d'une goulotte. Ces moyens de montage imposent des moyens de réception spécifiques sur le fond du socle de la goulotte. Ainsi, ce bloc électrique ne peut pas être rapporté dans n'importe quel socle mais seulement dans un socle agencé spécifiquement pour le recevoir. Enfin, lorsqu'un tel bloc électrique est accroché au fond du socle de la goulotte, il est très difficile à décrocher pour être déplacé.

### OBJET DE L'INVENTION

Afin de remédier aux inconvénients précités de l'état de la technique, la présente invention propose un accessoire de montage d'un bloc électrique dans un conduit de cheminement de câbles ou de conducteurs électriques, d'une part, qui permet de respecter les exigences normatives en matière de tenue du bloc dans le conduit tout en s'affranchissant des dispositions spécifiques prévues sur le boîtier du bloc électrique afin de ne pas dégrader son aspect esthétique, et, d'autre part, qui facilite le montage dudit bloc sur le conduit ainsi que son retrait afin d'être déplacé.

Plus particulièrement l'accessoire de montage selon l'invention comporte une pièce en U avec une base et deux branches latérales pourvues de dents d'accrochages au conduit. Il est caractérisé en ce que ladite base comporte sur une face arrière, destinée à être orientée vers le fond dudit conduit, un élément en saillie conformé pour assurer sa retenue dans un orifice prévu dans une embase du bloc électrique.

D'autres caractéristiques non limitatives et avantageuses de l'accessoire conforme à l'invention sont les suivantes :
- il comporte, en plus dudit élément, une dent qui fait saillie de la face arrière de la base et qui est destinée à s'accrocher sur un bord de l'embase du bloc électrique ;
- la face arrière de la base comporte deux niveaux reliés par un décroché, à savoir, un niveau inférieur sur le bord duquel est disposée ladite dent et un niveau supérieur qui porte ledit élément en saillie ;
- le niveau supérieur de la face arrière de la base présente un profil courbe ;
- la face arrière de la base porte en saillie deux éléments conformés pour assurer leur retenue dans deux orifices prévus dans l'embase du bloc électrique ;
- il est prévu, en saillie de la face arrière de la base, deux dents destinées à s'accrocher sur un bord de l'embase du bloc électrique ;
- chaque élément est un pion qui présente préférentiellement une section en croix ;
- il comporte un joint de couvercle comprenant, d'une part, une plaque de fermeture destinée à fermer une partie de l'ouverture longitudinale du conduit située entre le bloc électrique et un bord d'extrémité d'un tronçon de couvercle rapporté sur ce conduit, cette plaque de fermeture comportant un auvent adapté à recouvrir ledit bord d'extrémité du tronçon de couvercle, et, d'autre part, deux pattes de montage prévues sur un bord de ladite plaque de fermeture, aux deux extrémités de celle-ci, ces pattes de montage comportant chacune une dent d'accrochage au conduit et étant destinées à s'engager dans ledit conduit entre le bloc électrique et les branches latérales de la pièce en U parallèlement à celles-ci ; et
- il est réalisé par moulage d'une matière plastique, le joint de couvercle étant, en sortie de moulage, rattaché à ladite pièce en U par des liens sécables ou détachables.

L'invention concerne également un ensemble électrique comprenant, d'une part, un bloc électrique comportant un boîtier qui présente des parois latérales dépourvues de tout moyen de montage ou d'accrochage à un conduit quelconque et une embase pour reposer sur un support quelconque, présentant au moins un orifice obturé par un opercule, et, d'autre part, un accessoire tel que précité dont ledit élément de la pièce en U est conformé pour assurer le détachement ou le perçage dudit opercule et sa retenue dans ledit orifice de l'embase du bloc électrique.

Selon un mode de réalisation avantageux de l'ensemble électrique conforme à l'invention, l'embase du bloc électrique comporte à chaque extrémité dudit bloc une pluralité d'orifices obturés par des opercules et il est prévu deux accessoires du type précité dont au moins un élément de leur pièce en U est conformé pour assurer le détachement ou le perçage d'un opercule et sa retenue dans un orifice de l'embase du bloc électrique.

Selon d'autres caractéristiques avantageuses et non limitatives de l'ensemble électrique conforme à l'invention :
- chaque élément de la pièce en U de chaque accessoire est un pion dont le contour présente une forme adaptée à la forme de l'orifice correspondant du bloc électrique et dont la section est légèrement supérieure à la section dudit orifice pour être retenu par coincement dans ce dernier ;
- le bloc électrique est un bloc de prises de courant ; et
- il comprend une colonne technique comprenant au moins un conduit de cheminement de câbles ou de conducteurs électriques ouvert longitudinalement pour recevoir ledit bloc électrique, ce conduit comprenant des ailes latérales longitudinales pourvues de moyens de montage des dents d'accrochage des branches latérales de la pièce en U de chaque accessoire.

### DESCRIPTION DETAILLEE D'UN EXEMPLE DE REALISATION

La description qui va suivre en regard des dessins annexés, donnée à titre d'exemple non limitatif, fera bien comprendre en quoi consiste l'invention et comment elle peut être réalisée.

Sur les dessins annexés :
- la figure 1 est une vue schématique en perspective d'un ensemble électrique selon l'invention ;
- la figure 2 est une vue schématique éclatée de la figure 1 ;
- la figure 3 est une vue schématique en perspective d'un accessoire de montage selon l'invention ;
- la figure 4 est une vue de côté de la figure 3 ;
- la figure 5 est une vue de côté d'un ensemble électrique selon l'invention ;
- la figure 6 est une vue selon la flèche F1 de la figure 1 après montage de la pièce en U de l'accessoire selon l'invention à l'extrémité du bloc électrique ;
- la figure 7 est une vue selon la flèche F2 de la figure 1 après retrait du couvercle de fermeture du conduit électrique ; et
- la figure 8 est une vue en coupe longitudinale passant par un pion de l'ensemble électrique de la figure 5.

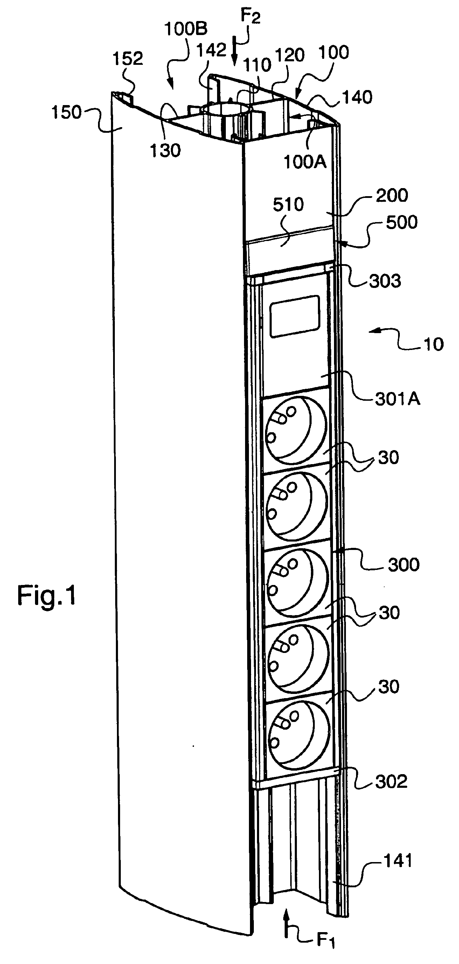

Sur les figures 1, 2, 6 et 7, on a représenté un ensemble électrique 10 qui comprend une colonne technique 100 (dont un tronçon seulement est représenté sur les figures), un bloc électrique 300 rapporté dans la colonne technique 100 au moyen d'un accessoire 40 de montage.

Cette colonne technique 100 est avantageusement placée dans des pièces de grande surface, telles que des bureaux paysagers, où elle est maintenue verticalement entre le plancher et le plafond. Une telle colonne peut également se présenter sous la forme d'un potelet dont la hauteur est telle que son sommet arrive au niveau d'un plateau de bureau. Enfin, une telle colonne peut être disposée à plat contre une paroi de fixation quelconque, courant notamment le long d'une plinthe d'une cloison ou d'une paroi de séparation.

La colonne technique 100 est destinée au support d'appareillages électriques comme des interrupteurs, des prises de courant, des portes-fusibles, des sectionneurs, des disjoncteurs.

Elle permet également de supporter des appareillages de commande et/ou de distribution d'énergie comme des appareillages informatiques et téléphoniques.

Elle permet enfin le cheminement des câbles ou des conducteurs auxquels lesdits appareillages sont connectés. Ces câbles ou conducteurs proviennent du sol, du plafond ou d'une paroi verticale et sont reçus à l'intérieur de la colonne dans au moins un conduit de cheminement de câbles ou de conducteurs électriques.

La colonne technique 100 représentée sur les figures comprend une ossature qui est généralement un profilé en aluminium filé et coupé à la longueur désirée de sorte qu'elle constitue une pièce monobloc.

Ici, l'ossature comprend en son centre un conduit tubulaire 110 et, à partir de ce conduit tubulaire 110, deux ailes longitudinales intérieures 120, 130 disposées dans le prolongement l'une de l'autre. Chaque aile longitudinale intérieure 120, 130 est liée à une aile extérieure 140, 150 qui s'étend perpendiculairement à celle-ci. Chaque aile longitudinale extérieure 140, 150 s'étend sur une hauteur identique de part et d'autre de l'aile longitudinale intérieure 120, 130 correspondante si bien que l'ossature présente une section globalement en forme de H. Les ailes longitudinales intérieures 120, 130 et extérieures 140, 150 délimitent deux conduits 100A, 100B de cheminement de câbles ou de conducteurs électriques, positionnés dos-à-dos et ouverts longitudinalement vers l'extérieur dans des directions opposées. Les ailes longitudinales intérieures 120, 130 forment les fonds des conduits 100A, 100B, tandis que les ailes longitudinales extérieures 140, 150 constituent les ailes latérales de ces conduits.

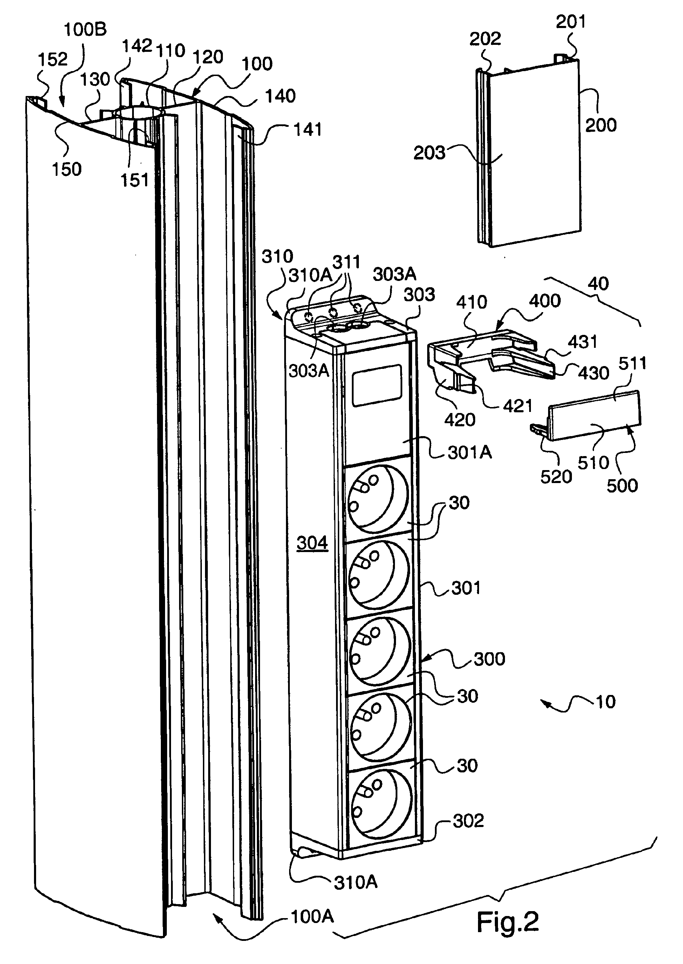

Les ailes longitudinales extérieures 140, 150 sont pourvues, à leurs extrémités libres, de moyens de montage 141, 142, 151, 152 de tronçons de couvercle 200 pour la fermeture de l'ouverture longitudinale de chaque conduit 100A, 100B (voir figures 1 et 2).

Ces moyens de montage comprennent ici des bandes de clipsage 141, 142, 151, 152 qui courent le long de la face intérieure des ailes longitudinales extérieures 140, 150 en bordant l'ouverture longitudinale du conduit 100A, 100B correspondant.

En correspondance, chaque tronçon de couvercle 200 comporte le long de ses deux bords longitudinaux parallèles, des pattes 201, 202 élastiques qui s'étendent perpendiculairement à la paroi de fermeture 203 dudit tronçon et qui sont pourvues de dents d'encliquetage adaptées à s'accrocher aux bandes de clipsage 141, 151, 142, 152 du conduit 100A, 100B considéré.

Chaque conduit 100A, 100B de la colonne technique 100 est adapté à recevoir le bloc électrique 300.

Ce bloc électrique 300 est ici un bloc de prises de courant 30.

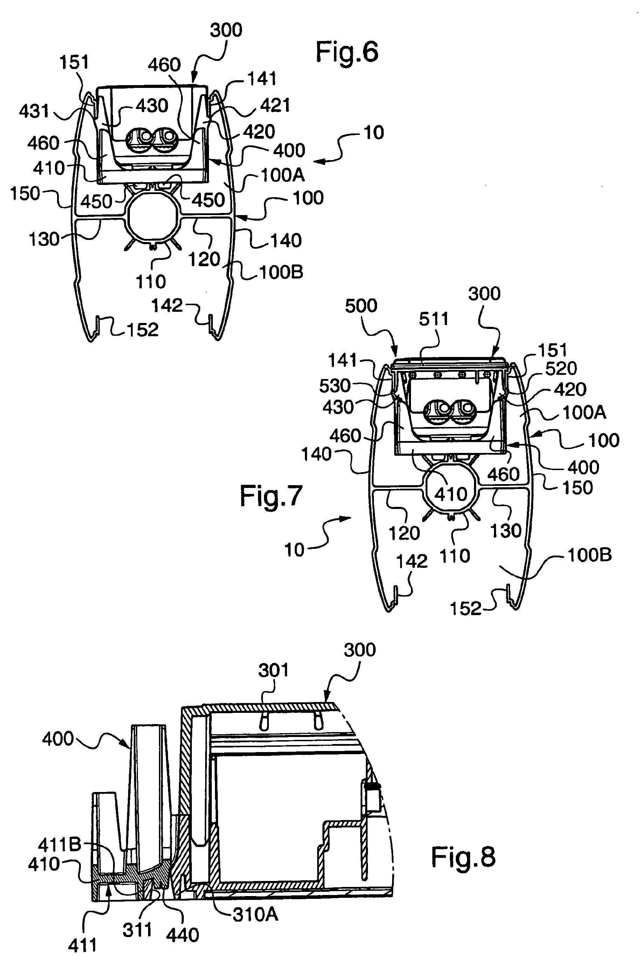

Il comprend un boîtier 301 de forme parallélépipédique rectangle qui contient les mécanismes de prise de courant. Ce boîtier 301 est fermé à l'avant par au moins un couvercle 301A ainsi que par les enjoliveurs formant les puits des prises de courant 30. La largeur du boîtier 301 correspond au jeu près à la largeur de l'ouverture longitudinale de chaque conduit 100A, 100B de la colonne technique 100. Ainsi, lorsque le boîtier 301 du bloc électrique 300 est inséré dans chacun des conduits 100A, 100B, il ferme l'ouverture longitudinale de ce conduit en s'étendant d'une bande de clipsage 141 à l'autre 151 (voir en particulier les figures 6 et 7), la face avant du bloc électrique 300 s'étendant sensiblement dans le même plan que les tronçons de couvercle 200.

Le boîtier 301 du bloc électrique 300 présente deux parois latérales longitudinales 304 et deux joues latérales d'extrémité 302, 303. Une des joues latérales d'extrémité 303 du boîtier 301 est percée d'orifices 303A pour le passage d'un câble servant à l'alimentation électrique des mécanismes d'appareillage, ici les mécanismes de prise de courant, contenus dans le boîtier 301.

Les parois latérales longitudinales 304 et les joues latérales d'extrémité 302, 303 du boîtier 301 sont exemptes extérieurement de tout moyen de montage ou d'accrochage à un conduit quelconque et notamment aux conduits 100A, 100B de la colonne technique 100.

Ce bloc électrique 300, appelé communément « nourrice », comporte une embase 310 pour reposer sur un support quelconque comme le plan de travail ou le pied d'un bureau, un panneau ou encore un mur ou le sol.

Cette embase 310 comporte deux parties 310A qui s'étendent à partir des extrémités du boîtier 301 dans des sens opposés, dans le prolongement longitudinal de celui-ci. Chaque partie 310A de l'embase 310 vient ici de formation avec une joue latérale d'extrémité 302, 303 du boîtier 301.

Préférentiellement, chaque joue latérale d'extrémité 302, 303 et la partie 310A d'embase associée forment une pièce monobloc réalisée par moulage d'une matière plastique.

L'embase 310 est pourvue d'orifices 311 au travers desquels peuvent être engagées des vis (non représentées) pour la fixation de l'embase 310 sur le support sur lequel repose éventuellement le bloc électrique 300.

Ici, chaque partie 310A de l'embase 310 comporte trois orifices 311 alignés. Chacun de ces orifices 311 est obturé par un opercule détachable ou transperçable par une vis de fixation. Selon l'exemple représenté, chaque opercule est rattaché au bord de chaque orifice 311 par des liens détachables ou cassables. Chaque opercule et ses liens de rattachement au bord de l'orifice 311 de l'embase 310, viennent de formation avec la joue latérale d'extrémité 302, 303 correspondante du boîtier 301.

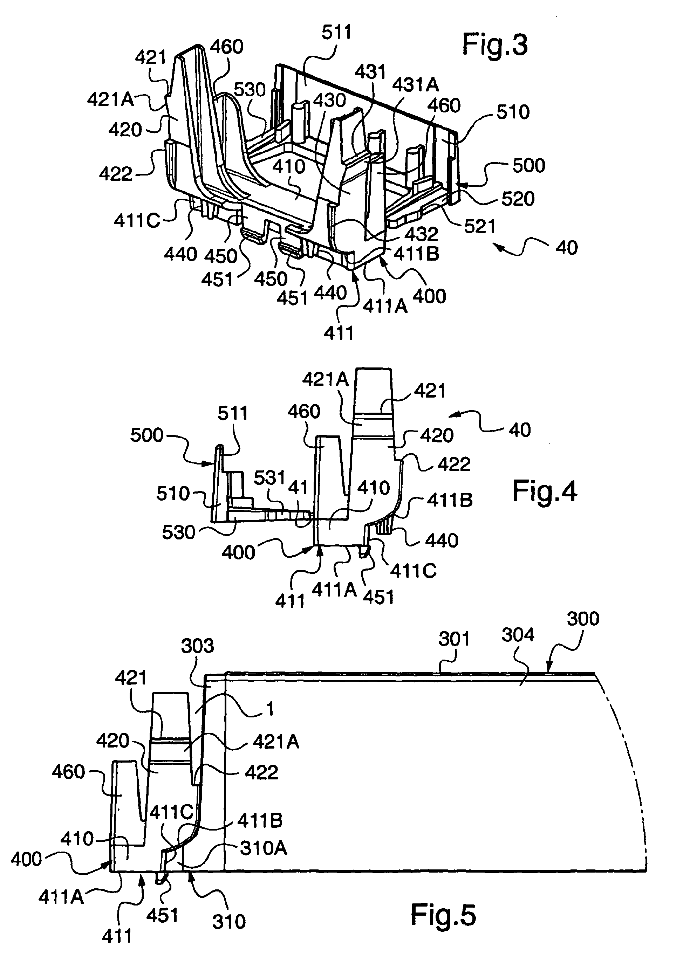

Pour le montage du bloc électrique 300 dans un conduit de cheminement de câbles ou de conducteurs, et notamment dans un conduit 100A, 100B de la colonne technique 100, il est prévu de rapporter à chaque extrémité du bloc électrique 300, un accessoire 40 représenté plus particulièrement sur les figures 3 et 4.

Comme le montrent plus particulièrement les figures 2 et 3, cet accessoire 40 comporte une pièce 400 en U avec une base 410 et deux branches latérales 420, 430 pourvues sur leurs faces externes opposées de dents d'accrochage 421, 431 au conduit 100A, 100B.

Lesdites dents d'accrochage 421, 431 sont adaptées à s'accrocher aux bandes de clipsage 141, 151, 142, 152 des ailes latérales longitudinales 140, 150 de chacun des conduits 100A, 100B de la colonne technique 100.

Chaque dent d'accrochage 421, 431 comporte une face d'accrochage qui s'étend globalement perpendiculairement à la direction longitudinale des branches latérales 420, 430. Elle présente également une face externe 421A, 431A qui s'étend en biais par rapport à la direction longitudinale desdites branches latérales. Chaque face externe en biais forme une rampe 421A, 431A qui sert au montage de l'accessoire 40 dans le conduit 100A correspondant, comme cela sera décrit plus en détail dans la suite de la description.

Selon une caractéristique remarquable de l'accessoire 40, la base 410 de la pièce 400 en U comporte sur une face arrière 411, destinée à être orientée vers le fond 110, 120 dudit conduit 100A, 100B, un élément 440 en saillie conformé pour assurer sa retenue dans un des orifices 311 prévus dans chaque partie 310A de l'embase 310 du bloc électrique 300 (voir figure 8).

Selon l'exemple représenté sur les figures, la face arrière 411 de la base 410 de l'accessoire 40 porte deux éléments 440 en saillie conformés pour s'engager à force dans deux orifices 311 d'une partie 310A de l'embase 310 du bloc électrique 300.

Avantageusement, chaque élément 440 est conformé pour assurer le détachement ou le perçage de l'opercule obturant l'orifice 311 de l'embase 310 du bloc électrique 300.

Chaque élément 440 est un pion dont le contour présente une forme adaptée à la forme de l'orifice 311 correspondant de l'embase 310 du bloc électrique 300 et dont la section est légèrement supérieure à la section dudit orifice 311 pour être retenu par coincement dans ce dernier.

Ici, chaque pion 440 présente une section en croix.

En outre, selon une caractéristique particulièrement avantageuse de l'accessoire 40, en plus de chaque élément 440, il est prévu une dent 451 qui fait saillie de la face arrière 411 de la base 410 de la pièce 400 en U. Cette dent 451 est destinée à s'accrocher sur un bord de l'embase 310 du bloc électrique 300 (voir figure 5).

Ici, il est prévu deux dents 451 situées entre les deux pions 440 et destinées à s'accrocher sur le bord d'une partie 310A de l'embase 310 du bloc électrique 300 (voir figure 5).

Chaque dent 451 est portée par l'extrémité d'une patte 450 qui s'étend à partir d'un bord de la face avant de la base 410, perpendiculairement à ladite face avant, en direction de la face arrière 411 de ladite base 410.

Comme le montrent plus particulièrement les figures 3 et 4, la face arrière 411 de la base 410 de la pièce 400 en U de l'accessoire 40 comporte deux niveaux 411A, 411B reliés par un décroché 411C, à savoir, un niveau inférieur 411A sur le bord duquel est disposée chaque dent 451 et un niveau supérieur 411 B qui porte chaque élément 440 en saillie.

Selon l'exemple représenté, le niveau supérieur 411B de la face arrière 411 de la base 410 présente un profil courbe.

Ce profil courbe est complémentaire du profil courbe de la surface supérieure de l'embase 310 et des joues latérales d'extrémité 302, 303 du boîtier 301 du bloc électrique 300.

Lorsque les pions 440 portés par la base 410 de la pièce 400 en U de l'accessoire 40 sont engagés dans les orifices 311 de l'embase 310 du bloc électrique 300, le niveau supérieur 411B et le décroché 411C de la face arrière 411 de ladite base 410, s'appliquent parfaitement contre ladite surface supérieure et la tranche de ladite embase 310 (voir figures 5 et 8).

Par ailleurs, la pièce 400 en U de l'accessoire 40 comporte deux autres branches latérales 460 parallèles auxdites branches latérales 420, 430 portant les dents d'accrochage 421, 431. Ces autres branches latérales 460 sont plus courtes que les branches portant lesdites dents d'accrochage 421, 431 ; Ce sont des branches de rigidification qui participent à la bonne tenue mécanique de l'accessoire. A l'opposé des branches 460 de rigidification, chaque branche latérale 420, 430 porte sur une tranche perpendiculaire à la face externe portant ladite dent d'accrochage 421, 431, une nervure de rigidification 422, 432 dont la hauteur est inférieure à la hauteur de ladite branche latérale 420, 430.

Selon le mode de réalisation préférentiel de l'invention représentée sur les figures, l'accessoire 40 comporte un joint de couvercle 500 qui comprend une plaque de fermeture 510 destinée à fermer une partie de l'ouverture longitudinale du conduit 100A située entre le bloc électrique 300 et un bord d'extrémité d'un tronçon de couvercle 200 rapporté sur ce conduit 100A (voir figures 1 et 7). Cette plaque de fermeture 510 comporte un auvent 511 adapté à recouvrir ledit bord d'extrémité du tronçon de couvercle 200. Le joint de couvercle 500 comprend deux pattes de montage 520, 530 prévues sur un bord de ladite plaque de fermeture 510, aux deux extrémités de celle-ci. Ces pattes de montage 520, 530 comportent chacune une dent d'accrochage 521, 531 au conduit 100A et sont destinées à s'engager dans ledit conduit 100A dans un espace libre 1 situé entre le bloc électrique 300 et les branches latérales 430, 420 de la pièce 400 en U de l'accessoire parallèlement à celles-ci (voir figures 5 et 7).

L'accessoire 40 est réalisé d'une seule pièce par moulage d'une matière plastique, le joint de couvercle 500 étant, en sortie de moulage, rattaché à ladite base 410 de la pièce 400 en U de l'accessoire 40 par des liens 41 sécables ou détachables (voir figures 3 et 4).

Grâce à l'accessoire 40, le montage du bloc électrique 300 dans le conduit 100A de la colonne technique 100 est réalisé aisément de la manière suivante.

L'installateur sépare la pièce 400 en U du joint de couvercle 500 de chaque accessoire 40 en cassant les liens 41.

Il engage à force les pions 440 de la pièce 400 en U de chaque accessoire 40 dans les orifices 311 de chaque partie 310A de l'embase 310 du bloc électrique 300 en défonçant les opercules qui obturent ces orifices 311. Chaque pièce 400 en U est ainsi solidarisée au boîtier 301 du bloc électrique 300.

Puis, il introduit l'ensemble dans le conduit 100A de la colonne technique 100 au travers de son ouverture longitudinale. Lors de cette introduction, les rampes 421A, 431A des dents d'accrochage 421, 431 portées par lesdites branche latérales 420, 430 de chaque pièce 400 en U, glissent contre les bandes de clipsage 141, 151 du conduit 100A et provoquent le rapprochement élastique desdites branches latérales 420, 430 pour effacer lesdites dents d'accrochage 421, 431. Lorsque les rampes 421A, 431A desdites dents d'accrochage 421, 431 quittent les bandes de clipsage 141, 151, les branches latérales 420, 430 reviennent élastiquement dans leur position d'origine écartées l'une de l'autre et les faces d'accrochage des dents d'accrochage 421, 431 s'accrochent automatiquement au bord desdites bandes de clipsage 141, 151.

Le bloc électrique 300 est alors solidement accroché aux bandes de clipsage 141, 151 du conduit 100A au moyen des accessoires 40. Il est suspendu par les pièces 400 en U des accessoires 40 aux bandes de clipsage 141, 151 du conduit 100A. Il ferme alors localement l'ouverture longitudinale du conduit 100A, les puits des enjoliveurs des prises de courant 30 de ce bloc étant accessibles par l'avant de ce conduit.

L'installateur a toutefois encore la possibilité de faire glisser les pièces 400 en U des accessoires sur lesdites bandes de clipsage 141, 151 pour ajuster la position du bloc électrique 300 le long du conduit 100A.

L'installateur rapporte les tronçons de couvercle 200 sur le conduit 100A pour fermer son ouverture longitudinale. Les enjoliveurs des prises de courant 30 s'étendent alors sensiblement dans le même plan que les tronçons de couvercle 200.

Puis l'installateur engage les pattes de montage 520, 530 du joint de couvercle 500 de chaque accessoire 40 entre le bloc électrique et chaque pièce 400 en U, pour les encliqueter sur les bandes de clipsage 141, 151 du conduit 100A. La paroi de fermeture 510 de chaque joint de couvercle 500 ferme alors la partie de l'ouverture longitudinale du conduit 100A située entre le bloc électrique 300 et le tronçon de couvercle 200 adjacent, en recouvrant le bord d'extrémité de ce dernier (voir figure 1). Chaque joint de couvercle 500 assure une liaison étanche entre le bloc électrique 300 et chaque tronçon de couvercle 200 adjacent afin d'éviter qu'un usager puisse, ultérieurement, à cet endroit, accéder à l'intérieur du conduit 100A où circulent les câbles et les conducteurs électriques.

Selon une variante non représentée de l'accessoire conforme à l'invention, on peut prévoir que chaque élément prévu en saillie de la face arrière de la pièce en U soit conformé pour s'encliqueter dans chaque orifice ou sur le bord de chaque orifice de l'embase du bloc électrique.

## Revendications

1. Accessoire (40) de montage d'un bloc électrique (300) dans un conduit (100A) de cheminement de câbles ou de conducteurs électriques, cet accessoire comportant une pièce (400) en U avec une base (410) et deux branches latérales (420,430) pourvues de dents d'accrochage (421,431) au conduit (100A), **caractérisé en ce que** ladite base (410) comporte sur une face arrière (411), destinée à être orientée vers le fond (120,130) dudit conduit (100A), un élément (440) en saillie conformé pour assurer sa retenue dans un orifice (311) prévu dans une embase du bloc électrique.

2. Accessoire (40) selon la revendication précédente, **caractérisé en ce qu'**il comporte, en plus dudit élément (440), une dent (451) qui fait saillie de la face arrière (411) de la base (410) et qui est destinée à s'accrocher sur un bord de l'embase (310) du bloc électrique (300).

3. Accessoire (40) selon la revendication précédente, **caractérisé en ce que** la face arrière (411) de la base comporte deux niveaux reliés par un décroché, à savoir, un niveau inférieur (411A) sur le bord duquel est disposée ladite dent (451) et un niveau supérieur (411B) qui porte ledit élément (440) en saillie.

4. Accessoire (40) selon la revendication précédente, **caractérisé en ce que** le niveau supérieur (411 B) de la face arrière (411) de la base (410) présente un profil courbe.

5. Accessoire (40) selon l'une des revendications précédentes, **caractérisé en ce que** la face arrière (411) de la base porte en saillie deux éléments (440) conformés pour assurer leur retenue dans deux orifices (311) prévus dans l'embase (310) du bloc électrique (300).

6. Accessoire (40) selon la revendication 2, **caractérisé en ce qu'**il est prévu, en saillie de la face arrière (411) de la base, deux dents (451) destinées à s'accrocher sur un bord de l'embase du bloc électrique.

7. Accessoire (40) selon l'une des revendications précédentes, **caractérisé en ce que** chaque élément (440) est un pion.

8. Accessoire (40) selon la revendication précédente, **caractérisé en ce que** chaque pion (440) présente une section en croix.

9. Accessoire (40) selon l'une des revendications précédentes, **caractérisé en ce qu'**il comporte un joint de couvercle (500) comprenant, d'une part, une plaque de fermeture (510) destinée à fermer une partie de l'ouverture longitudinale du conduit située entre le bloc électrique (300) et un bord d'extrémité d'un tronçon de couvercle (200) rapporté sur ce conduit, cette plaque de fermeture (510) comportant un auvent (511) adapté à recouvrir ledit bord d'extrémité du tronçon de couvercle, et, d'autre part, deux pattes de montage (520,530) prévues sur un bord de ladite plaque de fermeture (510), aux deux extrémités de celle-ci, ces pattes de montage comportant chacune une dent d'accrochage (521,531) au conduit et étant destinées à s'engager dans ledit conduit entre le bloc électrique (300) et les branches latérales (420,430) de la pièce (400) en U parallèlement à celles-ci.

10. Accessoire (40) selon la revendication précédente, **caractérisé en ce qu'**il est réalisé par moulage d'une matière plastique, le joint de couvercle (500) étant, en sortie de moulage, rattaché à ladite pièce (400) en U par des liens (41) sécables ou détachables.

11. Ensemble électrique (10) comprenant, d'une part, un bloc électrique (300) comportant un boîtier (301) qui présente des parois latérales (302,303,304) dépourvues de tout moyen de montage ou d'accrochage à un conduit quelconque et une embase (310) pour reposer sur un support quelconque, présentant au moins un orifice (311) obturé par un opercule, et, d'autre part, un accessoire (40) selon l'une des revendications précédentes dont ledit élément (440) de la pièce (400) en U est conformé pour assurer le détachement ou le perçage dudit opercule et sa retenue dans ledit orifice (311) de l'embase (310) du bloc électrique (300).

12. Ensemble électrique (10) selon la revendication précédente, dans lequel l'embase (310) du bloc électrique (300) comporte à chaque extrémité dudit bloc une pluralité d'orifices (311) obturés par des opercules et il est prévu deux accessoires (40) selon l'une des revendications 1 à 10 dont au moins un élément (40) de leur pièce (400) en U est conformé pour assurer le détachement ou le perçage d'un opercule et sa retenue dans un orifice (311) de l'embase (310) du bloc électrique (300).

13. Ensemble électrique (10) selon l'une des deux revendications précédentes, dans lequel chaque élément (440) de la pièce en U de chaque accessoire (40) est un pion dont le contour présente une forme adaptée à la forme de l'orifice (311) correspondant de l'embase du bloc électrique et dont la section est légèrement supérieure à la section dudit orifice (311) pour être retenu par coincement dans ce dernier.

14. Ensemble électrique (10) selon l'une des trois revendications précédentes, dans lequel le bloc électrique (300) est un bloc de prises de courant.

15. Ensemble électrique (10) selon l'une des quatre revendications précédentes, qui comprend une colonne technique (100) comprenant au moins un conduit (100A,100B) de cheminement de câbles ou de conducteurs électriques ouvert longitudinalement pour recevoir ledit bloc électrique (300), ce conduit comprenant des ailes latérales longitudinales (140,150) pourvues de moyens de montage (141,142,151,152) des dents d'accrochage (421,431) des branches latérales (420,430) de la pièce (400) en U de chaque accessoire (40).

## Claims

1. An accessory (40) for mounting an electrical unit (300) in an electric conductor or cable ducting conduit (100A), the accessory comprising a channel-section part (400) with a web (410) and two side flanges (420, 430) provided with attachment teeth (421, 431) for attaching to the conduit (100A), the accessory being **characterized in that** said base (410) includes a projecting element (440) on a rear face (411) for facing towards the back wall (120, 130) of said conduit (100A), the projecting element (440) being shaped to ensure that it is held in an orifice (311) provided in a base of the electrical unit.

2. An accessory (40) according to the preceding claim, **characterized in that** in addition to said element (440), it includes a tooth (451) that projects from the rear face (411) of the web (410) and that is for attaching on an edge of the base (310) of the electrical unit (300).

3. An accessory (40) according to the preceding claim, **characterized in that** the rear face (411) of the web has two levels connected together by a step, namely a lower level (411A) on the edge of which said tooth (451) is located, and an upper level (411B) that carries said projecting element (440).

4. An accessory (40) according to the preceding claim, **characterized in that** the upper level (411B) of the rear face (411) of the web (410) presents a curved profile.

5. An accessory (40) according to any preceding claim, **characterized in that** the rear face (411) of the web carries two projecting elements (440) that are shaped to ensure they are retained in two orifices (311) provided in the base (310) of the electrical unit (300).

6. An accessory (40) according to claim 2, **characterized in that** two teeth (451) are provided projecting from the rear face (411) of the web, the teeth being for attaching on an edge of the base of the electrical unit.

7. An accessory (40) according to any preceding claim, **characterized in that** each element (440) is a peg.

8. An accessory (40) according to the preceding claim, **characterized in that** each peg (440) presents a cross-shaped section.

9. An accessory (40) according to any preceding claim, **characterized in that** it includes a lid joint (500) comprising, firstly, a closure plate (510) for closing a portion of the longitudinal opening of the duct situated between the electrical unit (300) and an end edge of a lid segment (200) fitted on the conduit, said closure plate (510) including a cowl (511) adapted to cover said end edge of the lid segment, and secondly, two assembly tabs (520, 530) provided on an edge of said closure plate (510) at the two ends of thereof, each of the assembly tabs including an attachment tooth (521, 531) for attaching to the conduit and being designed to engage in said conduit between the electrical unit (300) and the side flanges (420, 430) of the channel-section part (400), being parallel thereto.

10. An accessory (40) according to the preceding claim, **characterized in that** it is made by molding a plastics material, the lid joint (500), on leaving the mold, being attached to said channel-section part (400) by breakable or detachable links (41).

11. An electrical assembly (10) comprising, firstly, an electrical unit (300) having a box (301) that presents side walls (302, 303, 304) having no means for mounting or attaching to any conduit, and a base (310) for resting on a support, presenting at least one orifice (311) that is closed by a diaphragm, and secondly, an accessory (40) according to any preceding claim, wherein said element (440) of the channel-section part (400) is shaped to detach or pierce said diaphragm and to be retained in said orifice (311) of the base (310) of the electrical unit (300).

12. An electrical assembly (10) according to the preceding claim, wherein the base (310) of the electrical unit (300) includes a plurality of orifices (311) at each end of said unit, the orifices being closed by diaphragms, and two accessories (40) are provided according to any one of claims 1 to 10 wherein at least one element (40) of their respective channel-section parts (400) is shaped to detach or pierce a diaphragm and to be retained in an orifice (311) of the base (310) of the electrical unit (300).

13. An electrical assembly (10) according to either one of the two preceding claims, wherein each element (440) of the channel-section part of each accessory (40) is a peg of outline that presents a shape that matches the shape of the corresponding orifice (311) in the base of the electrical unit, and of section that is slightly greater than the section of said orifice (311) so as to be retained therein by jamming.

14. An electrical assembly (10) according to any one of the three preceding claims, wherein the electrical unit (300) is a strip of power outlets.

15. An electrical assembly (10) according to any one of the four preceding claims, the assembly comprising a services column (100) including at least one electric conductor or cable ducting conduit (100A, 100B) that is
open longitudinally to receive said electrical unit (300), the conduit having longitudinal side flanges (140, 150) provided with mounting means (141, 142, 151, 152) for engaging the attachment teeth (421, 431) of the side flanges (420, 430) of the channel-section part (400) of each accessory (40).

## Patentansprüche

1. Zubehör (40) für die Montage eines elektrischen Blocks (300) in einen Schacht (100A) für Kabel oder elektrische Leiter, wobei dieses Zubehör ein U-förmiges Teil (400) mit einer Basis (410) und zwei Seitenarmen (420, 430) mit Zähnen (421, 431) zum Einhängen in den Schacht (100A) umfasst, **dadurch gekennzeichnet, dass** diese Basis (410) auf einer Rückseite (411), die dazu bestimmt ist, Richtung Boden (120, 130) des Schachts (100A) ausgerichtet zu werden, ein geeignetes herausstehendes Element (440) umfasst, um ihren Halt in einer Öffnung (311) in einem Sockel des elektrischen Blocks zu gewährleisten.

2. Zubehör (40) nach vorausgehendem Anspruch, **dadurch gekennzeichnet, dass** es zusätzlich zu diesem Element (440) einen Zahn (451) umfasst, der über die Rückseite (411) der Basis (410) heraussteht und dazu bestimmt ist, sich an einem Rand des Sockels (310) des elektrischen Blocks(300) einzuhängen.

3. Zubehör (40) nach vorausgehendem Anspruch, **dadurch gekennzeichnet, dass** die Rückseite (411) der Basis zwei in einem Winkel miteinander verbundene Ebenen aufweist, nämlich eine untere Ebene (411A), an deren Rand der Zahn (451) angeordnet ist, und eine obere Ebene (411B), die das hervorstehende Element (440) trägt.

4. Zubehör (40) nach vorausgehendem Anspruch, **dadurch gekennzeichnet, dass** die obere Ebene (411B) der Rückseite (411) der Basis (410) ein gewölbtes Profil aufweist.

5. Zubehör (40) nach einem der vorausgehenden Ansprüche, **dadurch gekennzeichnet, dass** die Rückseite (411) der Basis zwei geeignete hervorstehende Elemente (440) aufweist, um ihren Halt in zwei Öffnungen (311) im Sockel (310) des elektrischen Blocks (300) zu gewährleisten.

6. Zubehör (40) nach Anspruch 2, **dadurch gekennzeichnet, dass** an der Rückseite (411) der Basis hervorstehend zwei Zähne (451) vorgesehen sind, die dazu bestimmt sind, sich an einem Rand des Sockels des elektrischen Blocks einzuhängen.

7. Zubehör (40) nach einem der vorausgehenden Ansprüche, **dadurch gekennzeichnet, dass** jedes Element (440) ein Stift ist.

8. Zubehör (40) nach vorausgehendem Anspruch, **dadurch gekennzeichnet, dass** jeder Stift (440) einen kreuzförmigen Querschnitt aufweist.

9. Zubehör (40) nach einem der vorausgehenden Ansprüche, **dadurch gekennzeichnet, dass** es eine Deckelauflage (500) umfasst, die zum einen eine Verschlussplatte (510) umfasst, die einen Teil der Längsöffnung des Schachts zwischen dem elektrischen Block (300) und einem abschließenden Rand eines auf diesen Schacht gesetzten Deckelabschnitts (200) schließen soll, wobei diese Verschlussplatte (510) ein Schutzdach (511) umfasst, das den abschließenden Rand des Deckelabschnitts abdecken kann, und zum anderen zwei Montagezungen (520, 530), die an einem Rand der Verschlussplatte (510) vorgesehen sind, wobei diese Montagezungen an beiden Enden der Verschlussplatte jeweils einen Zahn (521, 531) zum Einhängen in den Schacht umfassen und dazu bestimmt sind, in den Schacht zwischen dem elektrischen Block (300) und den Seitenarmen (420, 430) des zu ihnen parallelen U-förmigen Teils (400) einzugreifen.

10. Zubehör (40) nach dem vorausgehenden Anspruch, **dadurch gekennzeichnet, dass** es durch Formgießen eines Kunststoffes realisiert wird, wobei die Deckelauflage (500) am Ende des Formgießens durch abtrennbare oder abklemmbare Verbindungen (41) mit dem U-förmigen Teil (400) verbunden wird.

11. Elektrische Einheit (10), die einerseits einen elektrischen Block (300) mit einem Gehäuse (301) umfasst, das Seitenwände (302, 303, 304) ohne jegliche Montage-oder Einhängemittel in einen beliebigen Schacht sowie eine Grundplatte (310) aufweist, um auf einer beliebigen Unterlage aufzuliegen, welche mindestens eine durch eine Kappe verschlossene Öffnung (311) aufweist und andererseits ein Zubehör (40) nach einem der vorausgehenden Ansprüche, dessen Element (440) des U-förmigen Teils (400) dazu geeignet ist, das Aushängen oder das Durchbohren der Kappe und ihren Halt in der Öffnung (311) der Grundplatte (310) des elektrischen Blocks (300) zu gewährleisten.

12. Elektrische Einheit (10) nach vorausgehendem Anspruch, bei der die Grundplatte (310) des elektrischen Blocks (300) an jedem Ende dieses Blocks eine Vielzahl von durch Kappen verschlossenen Öffnungen (311) umfasst und zwei Zubehörteile (40) nach einem der Ansprüche 1 bis 10 vorgesehen sind, von denen mindestens ein Element (40) ihres U-förmigen Teils (400) dazu geeignet ist, das Aushängen oder Durchbohren einer Kappe und ihren Halt in einer Öffnung (311) der Grundplatte (310) des elektrischen Blockes (300) zu gewährleisten.

13. Elektrische Einheit (10) nach einem der beiden vorausgehenden Ansprüche, bei der jedes Element (440) des U-förmigen Teils jedes Zubehörs (40) ein Stift ist, dessen Kontur eine für die Form der Öffnung (311) geeignete Form aufweist, die der Grundplatte des elektrischen Blocks entspricht und deren Querschnitt etwas größer ist als der Querschnitt der Öffnung (311), um durch Einklemmen in der Öffnung zu halten.

14. Elektrische Einheit (10) nach einem der drei vorausgehenden Ansprüche, bei der der elektrische Block (300) ein Block mit Steckdosen ist.

15. Elektrische Einheit (10) nach einem der vier vorausgehenden Ansprüche, die eine technische Säule (100) mit mindestens einem der Länge nach für die Aufnahme des elektrischen Blocks (300) offenen Schacht (100A,100B) für Kabel oder elektrische Leiter umfasst, wobei dieser Schacht seitliche Längsflügel (140, 150) mit Montagemitteln (141, 142, 151, 152) für die Einhängezähne (421, 431) der Seitenarme (420, 430) des U-förmigen Teils (400) jedes Zubehörteils (400) umfasst.
